(19) **Europäisches Patentamt**
**European Patent Office**
**Office européen des brevets**

(11) **EP 4 727 119 A1**

(12) **EUROPEAN PATENT APPLICATION**

(43) Date of publication:
**15.04.2026  Bulletin 2026/16**

(51) International Patent Classification (IPC):
**H04N 19/117** *(2014.01)*   **H04N 19/82** *(2014.01)*
**H04N 19/70** *(2014.01)*   **H04N 19/182** *(2014.01)*

(21) Application number: **24306666.9**

(22) Date of filing: **10.10.2024**

(52) Cooperative Patent Classification (CPC):
**H04N 19/117; H04N 19/182; H04N 19/70;**
**H04N 19/82**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BORDES, Philippe**
**35890 LAILLE (FR)**
• **BOISSON, Guillaume**
**35137 PLEUMELEUC (FR)**
• **RATH, Gagan Bihari**
**35000 RENNES (FR)**
• **LE PENDU, Mikael**
**35700 RENNES (FR)**

(74) Representative: **Interdigital**
**Immeuble ZEN 2**
**845 A, avenue des Champs Blancs**
**35510 Cesson-Sévigné (FR)**

(54) **CLASSIFICATION-BASED POST-FILTER RESCALING**

(57)    A decoding method is disclosed. A current filtering classifier is obtained, for a group of reconstructed samples, in a set of filtering classifiers. For each reconstructed sample of the group, a correction is determined responsive to a classification with the current filtering classifier.

For the group of reconstructed samples, a scale classifier is obtained in the set of filtering classifiers. Each reconstructed sample of the group is classified with the scale classifier if different from the current filtering classifier.

The correction of each reconstructed sample of the group is modified responsive to the classification. The modified correction is added to the corresponding reconstructed sample.

```
┌─────────────────────────────────────────────────────────────────┐
│ Obtaining, for a group of reconstructed samples, a current        │  S902
│ filtering classifier in a set of filtering classifiers            │
└─────────────────────────────────────────────────────────────────┘
                              ↓
┌─────────────────────────────────────────────────────────────────┐
│ Determining, for each reconstructed sample of the group, a        │  S904
│ correction responsive to a classification with the current        │
│ filtering classifier                                              │
└─────────────────────────────────────────────────────────────────┘
                              ↓
┌─────────────────────────────────────────────────────────────────┐
│ Obtaining, for the group of reconstructed samples, a scale        │  S906
│ classifier in the set of filtering classifiers                    │
└─────────────────────────────────────────────────────────────────┘
                              ↓
┌─────────────────────────────────────────────────────────────────┐
│ Classifying each reconstructed sample of the group with the       │  S908
│ scale classifier if different from the current filtering          │
│ classifier                                                         │
└─────────────────────────────────────────────────────────────────┘
                              ↓
┌─────────────────────────────────────────────────────────────────┐
│ Modifying, for each reconstructed sample of the group, the        │  S910
│ correction responsive to the classification                       │
└─────────────────────────────────────────────────────────────────┘
                              ↓
┌─────────────────────────────────────────────────────────────────┐
│ Adding the modified correction to the corresponding reconstructed │  S912
│ sample                                                            │
└─────────────────────────────────────────────────────────────────┘
```

**FIG. 9**

EP 4 727 119 A1

**Description**

**BACKGROUND**

The present application is related to video coding systems that may be used to compress digital video signals, for example, to reduce the storage and/or transmission bandwidth associated with such signals. Video coding systems may include block-based, wavelet-based, and/or object-based systems. A block-based hybrid video coding system may be deployed.

**BRIEF SUMMARY**

Briefly stated, in one embodiment, a decoding method is disclosed. An encoding method is also disclosed. A current filtering classifier may be obtained, for a group of reconstructed samples, in a set of filtering classifiers. For each reconstructed sample of the group, a correction may be determined responsive to a classification with the current filtering classifier. For the group of reconstructed samples, a scale classifier may be obtained in the set of filtering classifiers. Each reconstructed sample of the group may be classified with the scale classifier if different from the current filtering classifier.
The correction of each reconstructed sample of the group may be modified responsive to the classification. The modified correction is added to the corresponding reconstructed sample. Corresponding encoding and decoding apparatuses are disclosed.

**BRIEF DESCRIPTION** OF **THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a block diagram illustrating an example process for classified-based post-filtering;
FIG. 5 is a block diagram illustrating an example process for post-filtering with scaling correction;
FIG. 6 is a block diagram illustrating an example process for classification-based scaling correction
FIG. 7 is a block diagram illustrating an example process for adaptive loop filtering (ALF) and ALF scale correction processing;
FIG. 8 depicts part of an Adaptation Parameter Set (APS) nal unit comprising four alternative filter sets ;
FIG. 9 is a block diagram illustrating an example of a method according to one or more embodiments of the present disclosure;
FIG. 10 is a block diagram illustrating an example filtering and scale correction method according to one or more embodiments of the present disclosure;
FIG. 11 illustrates an example of scale classifier derivation for a particular group of samples;
FIG. 12 is a block diagram illustrating an example filtering and scale correction method according to one or more other embodiments of the present disclosure; and
FIG. 13 illustrates another example of scale classifier derivation for a particular group of samples.

**DETAILED DESCRIPTION**

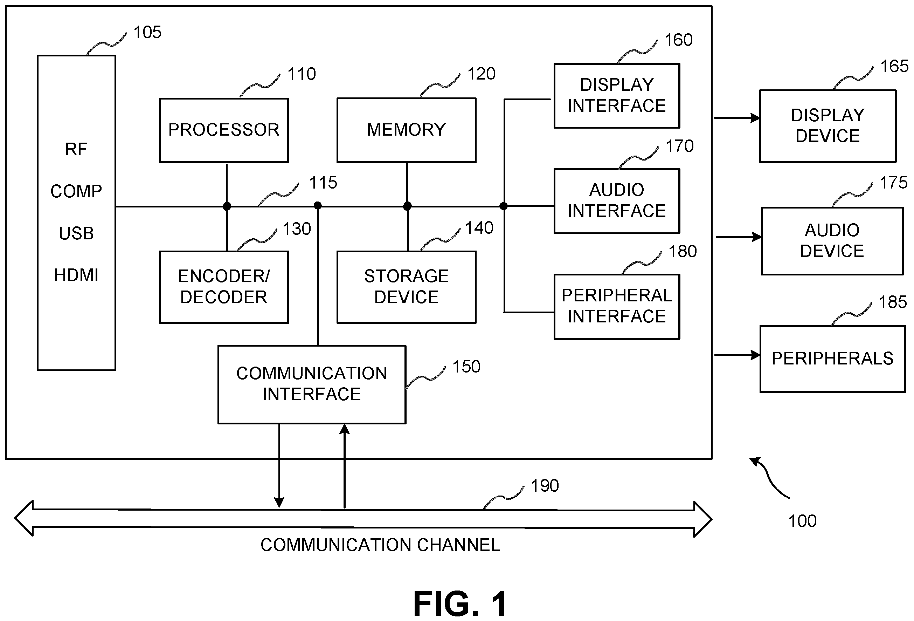

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

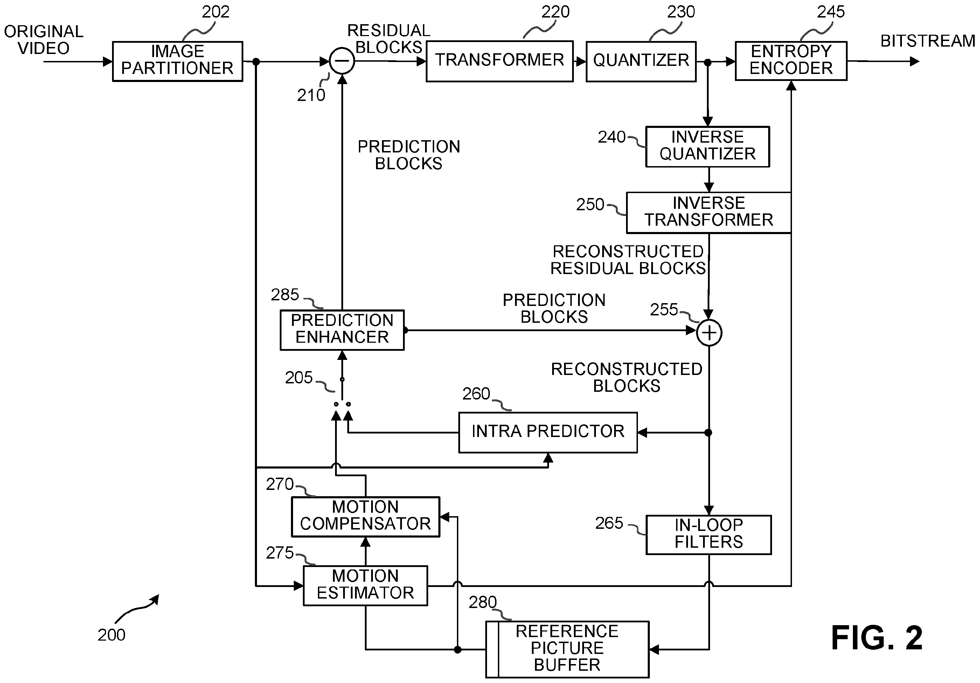

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

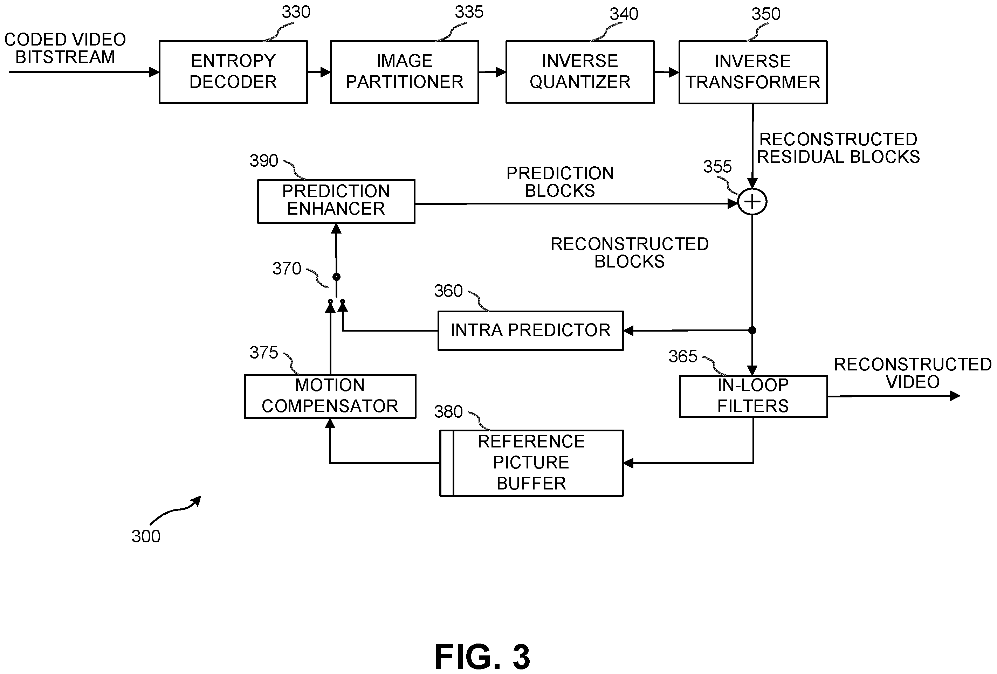

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are dequantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In-loop post-filtering may be implemented by video codecs. A reconstructed picture may be enhanced with post-filtering. The post-filtering may be referred to as in-loop, for example, if/when the filtered pictures may be stored in the decoded picture buffer (DPB) to be furtherly used as inter-prediction. In some examples, post-filtering may use additional data, e.g., also known as filter parameters, such as linear filter coefficients, sample offsets, etc., that may be implicit (e.g., pre-defined values that may be known at the decoder side), e.g., also known as fixed filters, or explicit (e.g., values coded in the bitstream), e.g., also known as non-fixed or adaptive filters or sample adaptive offsets.

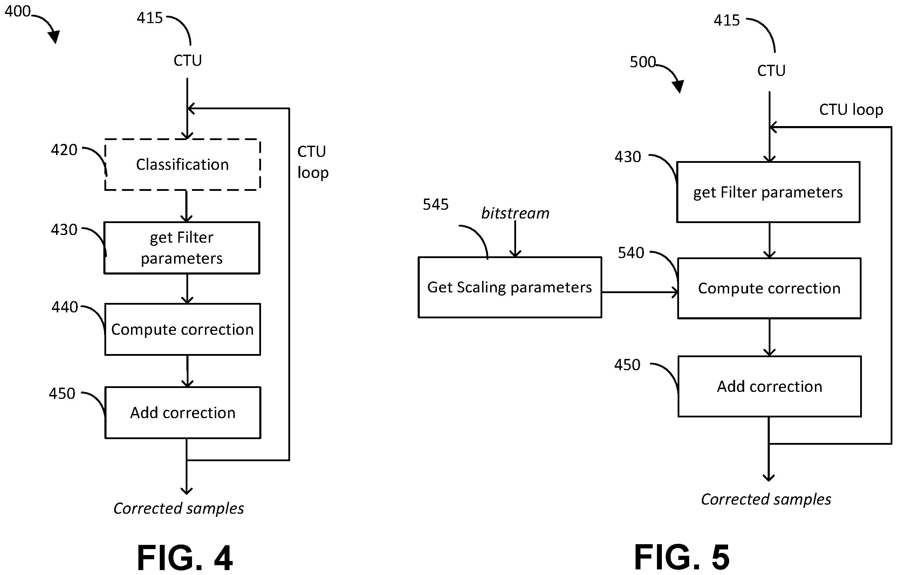

FIG. 4 is a block diagram illustrating an example process 400 for classified-based post-filtering. In some examples (e.g., as shown in FIG. 4), picture samples (e.g., 415) may be classified (420) into N classes $Cl_{i=0,...N-1}$. A set of N filter parameters $P_{i=0,...N-1}$ may be selected (430) (e.g., implicit case) or coded in the bitstream (e.g., explicit case). A (e.g., each) sample classified as $Cl_k$ may be filtered with filter parameter $P_k$. The filter parameters may be defined per region (e.g., per slice, per CTU). A post-filtering process may compute (e.g., for each reconstructed sample) a correction (440) to be added (450) to the reconstructed samples. In case of classification-based filtering, a correction may be based on the parameters (430) associated with a class (420) of the sample.

An ALF and/or cross-component ALF (CC-ALF) filter may be applied as post-filter. An ALF may classify reconstructed samples (e.g., luma and/or chroma) into different classes. A (e.g., one) class index ($Cl_k$) may be associated with one or more (e.g., each) reconstructed sample. A set of filter parameters $P_k$ may be associated with a (e.g., each) class index. For example, $P_k$ may be a set of linear filter coefficients. An example of an ALF filter may be represented, for example, in accordance with Eq. (8):

$$F_k(x_0) = \sum_{i=-n}^{n} c_i \cdot x_i \qquad (8)$$

Where $P_k = \{c_i\}_{i=-n...+n}$ may be the filter coefficients, $x_i$ may be sample neighbors to x, $x = x_0$ and $F_k(x)$ may be a filtered value of x. Eq. (8) is equivalent to adding a correction corr to $x_0$, with corr=$F_k(x_0)$ - $x_0$. The correction corr is thus a difference between the post-filtered reconstructed sample value and the reconstructed sample value.

One or more classifiers (CF) may be used. The type of classifier may be signaled in the bitstream, for example per region (e.g., per group of samples, per slice, per picture, per CTU, etc). For example (e.g., in ALF), non-fixed filter classifier may be a Laplacian classifier (e.g., using directional gradients), a band classifier or a residual classifier.

A band classifier may classify luma reconstructed samples into (e.g., equally) spaced bands between 0 and (1<<bitdepth), where bitdepth may be an integer bit depth representation of a (e.g., one) reconstructed sample data. A Laplacian classifier may use local gradients to derive dominant direction and/or activity to derive classes. Similarly, a residual classifier may derive classes with absolute values of residual values.

As mentioned previously, in case of non-fixed filters, filter parameters (e.g., filter coefficients) may be coded (e.g., explicitly coded) in the bitstream. Non-fixed coefficients of ALF may be derived for a (e.g., one or several) frame and/or transmitted in the bitstream into an (e.g., one) Adaptation Parameter Set (APS) nal unit or in a slice header (e.g., for example, for each class). One APS nal unit may include "numAlt" (e.g., alternative) filter sets (e.g., numAlt =4). An (e.g., each) alternative filter set of an (e.g., each) APS may be identified by an index "alt-num". The parameters of one alternative filter set of an APS (e.g., filter parameters, classifier CF) are denoted "APS-alt". In the following, APS-alt and filter set may be used interchangeably. One may group several classes of a filter set, for example, so that coefficients may be the same and/or similar for different classes, which may increase coding efficiency (e.g., the coding cost is reduced). The APS is indexed with an "APS-Id" and the CTUs of the subsequent frames may re-use the coefficients of ALF that were previously decoded from an APS.

The APS may be indexed with an "APS-Id". CTUs of subsequent frames may re-use coefficients of an ALF that were previously decoded from an APS. The (e.g., which) "APS-Id" and "alt-num" to use may be signaled (e.g., per slice or per CTU) in video data (e.g., a bitstream).

Considering ALF, non-fixed coefficients may have been derived (e.g., optimized) for a (e.g., one) frame and transmitted in the bitstream into an APS nal unit. Non-fixed coefficients may be sub-optimal for subsequent frames.

Correction may thus be applied. Deriving and applying different scaling parameters with an appropriate classification may improve the benefit of scaling the post-filtering correction in video coding.

**FIG. 5** is a block diagram illustrating an example process 500 for post-filtering with scaling correction. Scaling parameters may allow for modifying a post-filter correction (which is the difference between the reconstructed sample value and the post-filtered reconstructed sample value). In some examples (e.g., as shown in FIG. 5), a parameter allowing derivation of a scaling (scale) or offset (off) parameter may be transmitted in the bitstream (545) to adapt the correction (540). Examples of adaptation of the correction may be determined, for example, in accordance with Eqs. (1) to (7), where "corr" is the post-filter correction, { si, oj } are the scaling parameters, and "corr' " is the modified (e.g., scaled) correction:

$$\text{corr}' = \text{scale x corr} \qquad (1)$$

$$\text{corr}' = \text{corr} + \text{off} \qquad (2)$$

$$\text{corr}' = s0 \text{ x corr} + s1 \text{ x corr}^2 \qquad (5)$$

$$\text{corr}' = s0 \text{ x corr} + o0 \qquad (6)$$

$$\text{corr}' = s0 \text{ x corr} + s1 \text{ x corr}^2 + o0 \qquad (7)$$

Scaling parameters may be adapted to an associated classification. A modified (e.g., scaled correction) may be tailored to a (e.g., one) classifier (CS). A classifier (CS) may re-use existing classifiers that may be used by a post-filter or another classifier.

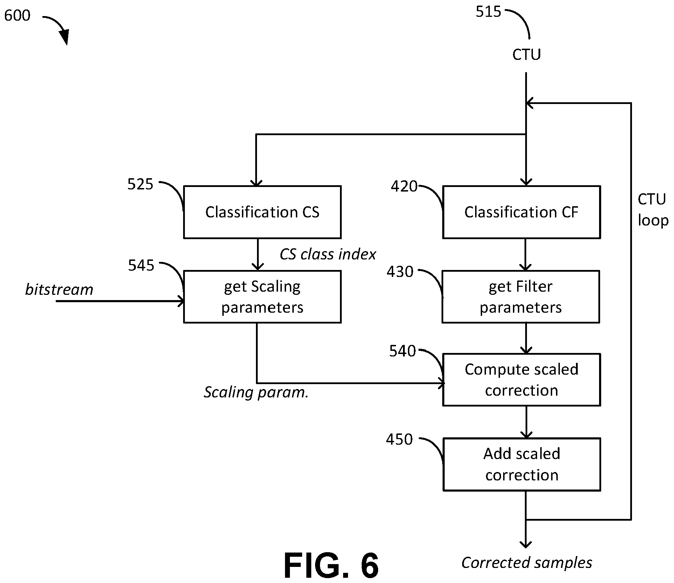

**FIG. 6** is a block diagram illustrating an example process 600 for classification-based scaling correction. Classification-based scaling correction may be implemented. A scaling correction may be tailored to a (e.g., one) classification (CS). As shown by example in FIG. 6, a classifier (525) may allow derivation of a (e.g., one) class index (a.k.a. classification index), e.g. for each reconstructed sample. In an example, the class index may be given by the classifier CS, e.g., which classifies one (e.g., each) reconstructed sample. One or more scaling parameters may be defined, e.g., one (e.g., each) scaling value may be associated with a class index. The correction (e.g., the difference between the reconstructed sample value and the post-filtered reconstructed sample value) may be modified (e.g., scaled) with the scaling parameters associated with the class index (545). Examples of scaling parameters may include "scale" or "off," for example, as mentioned in Eqs. (1) to (7), respectively. In some examples, the classifier CS may be same as the classifier CF that may be used to derive the filter parameters (e.g., filter coefficients). The classifier CS may be the same as one of the existing ALF classifiers (CF), or the same as the ALF classifier used for deriving the filter coefficients of the current reconstructed sample. In another variant, the classifier CS may be a neural network.

One or more (e.g., a set, a subset or all) scaling parameters may be signaled (e.g., transmitted) in a bitstream, e.g. in slice or picture headers. In another example, one or more (e.g., a set, a subset or all) scaling parameters may be known (e.g., implicitly) by the decoder. One or more (e.g., all) scaling parameters may be signaled, e.g., for one (e.g., each) APS-alt used in the current slice or frame. In another example, one or more scaling parameters may not be transmitted explicitly. An index (e.g., idxCorr) referring to a (e.g., pre-determined) table (e.g., a look-up-table (LUT)) of scaling parameter values may be used. A particular index value (e.g., idxCorr=0) may indicate that the correction is not modified (e.g., may correspond to not modifying the correction). Several pre-determined tables may be used. A selected table may depend on, for example, one or more coding parameters, such as the temporal identifier index (TId) of the current picture/slice, the QP base of the slice, the picture order count (POC), the slice type, and/or the like. In examples, a table may be selected implicitly and/or signaled in video data (e.g. a bitstream). A scaling parameter (e.g., indexes) may be coded in a slice header, a picture header, and/or the like, or in the video coding layer (VCL) (e.g., using a context-adaptive binary arithmetic coding (CABAC) entropy coder). In examples, table indexes may be coded with a first CTU data. Values of the tables may be updated from the scaling parameter (e.g., indexes) that may have been previously coded in the bitstream. In examples, the table may be updated with a scaling parameter (e.g., indexes) that may have been previously coded in the bitstream for previous frames, e.g., with same TId.

The number of transmitted scaling parameter indexes may be inferior to the number of CS classes. In some examples, non-transmitted index values may be inferred, for example to correspond to "correction not modified." Some classes may be grouped together. A (e.g., one single) transmitted index may be associated with several classes. For example, a syntax element GS may be signaled (e.g., first), allowing the derivation of the number of group (nbGroup). The nbGroup scaling parameter indexes may be coded (e.g., next). For example, nbGroup = 1 << GS or nbGroup = GS. Or some pre-determined values of "nbGroup" may be associated with different values of GS. In some examples (e.g., ALF post-filter), the grouping of classes may be the same as the group used for the transmitted filter coefficients of APS-ALF parameters, e.g., if CS is same as CF.

The value of (min;max) (e.g., may be the minimal and/or maximal sample values for a (e.g., one) component) may be derived, for example, from the adaptive clipping information coded in the bitstream and/or derived from previous reconstructed frames. Scaling parameter(s) (e.g., indexes) for the classes corresponding to samples out of the clipping range may not be transmitted, for example, if a classifier is a band classifier. In some examples, the scaling parameter (e.g., indexes) for classes corresponding to samples out of a clipping range may be inferred (e.g., correction not modified) and/or derived from (e.g., other) transmitted scaling parameter values.

A flag "re-use-flag" may be signaled for each APS-alt used in the current picture to indicate if the scaling parameters may re-use the same values as the ones used with same APS-alt in a previous frame.

An example of syntax for coding the scaling parameter indexes in the slice header is depicted in Table 1.

Table 1 - Example of syntax for coding the scaling parameter indexes

| slice_header( ) { | Descriptor |
|---|---|
| use_alf_scale_flag | u(1) |
| if(use_alf_scale_flag) | |
| for (int i = 0; i < pcSlice->getTileGroupNumAps(); i++) { | |
| for (int j = 0; j < numAlts[i] ; j++ ) { | |
| re-use-flag | u(1) |
| if (! re-use-flag) | |
| { | |
| alf_scale_group_shift[i] [j] | ue(v) |
| For (int g = 0; g < (1<< alf_scale_group_shift[i] [j]); g++ ) { | |
| alf_scale_group_idx_corr[i][j][g] | u(1) |
| if (alf_scale_group_idx_corr[i][j][g] && nbCorr > 2 ) { | |
| uiCode | u(nbCorr) |
| alf_scale_group_idx_corr[i][j][g] += uiCode | |
| } | |
| } | |
| } | |
| } | |
| } | |
| } | |

With reference to the syntax example in Table 1, a parameter use_alf_scale_flag equal to zero ( 0) may indicate, for example, that no scaling parameters are coded and/or that the scaling parameter indexes may be inferred to be zero (0). A parameter use_alf_scale_flag equal to one (1) may indicate, for example, that one or more (e.g., some) scaling parameters are coded. A parameter alf_scale_group_shift[i][j] may allow derivation of the number of coded scaling parameter indexes for the $j^{th}$ alternative filter of the $i^{th}$ APS referenced in the current slice equal to (1 << alf_scale_group_shift[i][j]). A parameter alf_scale_group_idx_corr[i][j][g] may be a scaling parameter index associated with the $g^{th}$ group of classes.

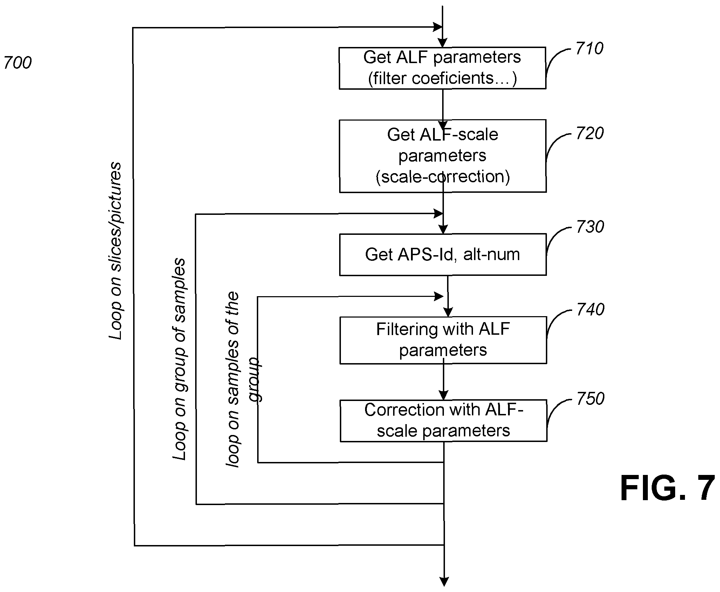

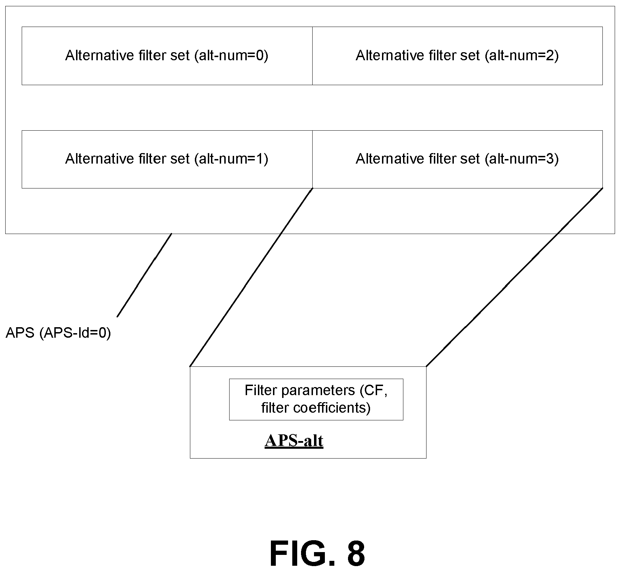

**FIG. 7** is a block diagram illustrating an example process 700 for ALF filtering and ALF scale correction processing. At the beginning (e.g., in a header) of a (e.g., each) region (e.g., slice or picture), a list of APS used in the current region (e.g., slice/picture) is derived (710). For example, a list of APS-Id (e.g., in the slice header) may be decoded. An APS may comprise a plurality (e.g., 4) of alternative filter sets. A filter set may comprise several filters (e.g., several filter coefficients), e.g., one filter for each class. For an (e.g., for each) alternative filter set (e.g., identified by alt-num) of an (e.g. each) APS, a list of ALF scale parameters (e.g., idxCorr or scale values, etc) may be derived (720). For one (e.g., each) group of samples (e.g., CTU or CU), APS-Id and alt-num values are derived (e.g., decoded) (730) to select the ALF parameters used to filter the samples (740) of that group and the ALF scale parameters used to re-scale the correction (750). In an example depicted on **FIG. 8**, an APS may comprise 4 alternative filter sets and each alternative filter set may comprise a plurality (e.g., N) of filters (e.g., N=25 filters), e.g., one per each class (e.g., each class obtained by the CF classifier). In this example, alt-num may thus belong to the set {0, 1, 2, 3}.

In an example, several scaling parameters may be defined, e.g., selected for each reconstructed samples with its classification. The scaling parameters make it possible to modify the post-filter correction. In another example, the scale classifier CS may re-use existing classifier used by the post-filter or another classifier defined for post-filtering. For example, the classifier CS used for selecting the scaling parameters may be another classifier (e.g., a NN-based classifier) than the one (CF) used by current sample for filtering (e.g., for ALF filtering). In another example, the classifier CS used for selecting the scaling parameters may be another ALF classifier than the one used by current sample for filtering (e.g., may be an ALF classifier different from the classifier CF used by current sample for filtering). In another example, the same or another classifier may be defined (e.g., signaled) for all the samples (or CTUs) of the current image or slice. The other classifiers may be defined per group of samples (e.g., per CTU or CU). In the following a group of samples may be a CTU or a CU. The other classifiers may be signaled for each alt-num of each APS. In case of re-use of previous APS scaling parameters, the CS classifier may be kept the same as the previous CS classifier for this APS-alt.

In the following, a post-filter named ALF is considered, e.g. a regular Adaptive Loop Filter (ALF) or any other post-filter that will modify (correct) the reconstructed samples using linear, non-linear or neural network based algorithm. The post-filter may use at least one classifier to associate an "alf-class-index" with a (e.g., each) reconstructed samples. Different post-filtering parameters may be associated with different "alf-class-index".

ALF may use a classifier CF to classify a (e.g., each) sample so that one "alf-class-index" value is associated with the (e.g., each) each sample. The value of "alf-class-index" allows to select the coefficients for filtering the current sample. In the following, one considers M=3 ALF classifiers {CFi}i=0,1,2. In an example, CF0 indicates Laplacian classifier, CF1 indicates band classifier and CF3 indicates residual classifier. However, M may take any other values. For a (e.g., each) group of samples (e.g., one group is a CTU), a type of filter is signaled (e.g., fixed or non-fixed filter). For a (e.g., each) group of samples using non-fixed filters, alt-num and APS identifier (APS-Id) of the APS used by this group are signaled. The APS parameters (APS-alt) may comprise the ALF classifier to be used CFi and the filter coefficients. Then, each group of samples may use different value of CFi.

Several scaling parameters may be defined. For example, a (e.g., each) scaling value may be associated with a "scale-class-index". The "scale-class-index" may be given by a classifier (scale classifier CS) which may classify each reconstructed sample of the reconstructed picture. The scaling correction parameters may be transmitted per picture or slice, for example for each APS-alt (i.e., for each filter set) used by the picture or slice. In an example, the scale classifier (CS) for one APS-alt may be the same or different from the ALF classifiers (CF) used to select the filter coefficients. In a variant, CS is one among the existing ALF classifiers (CF).

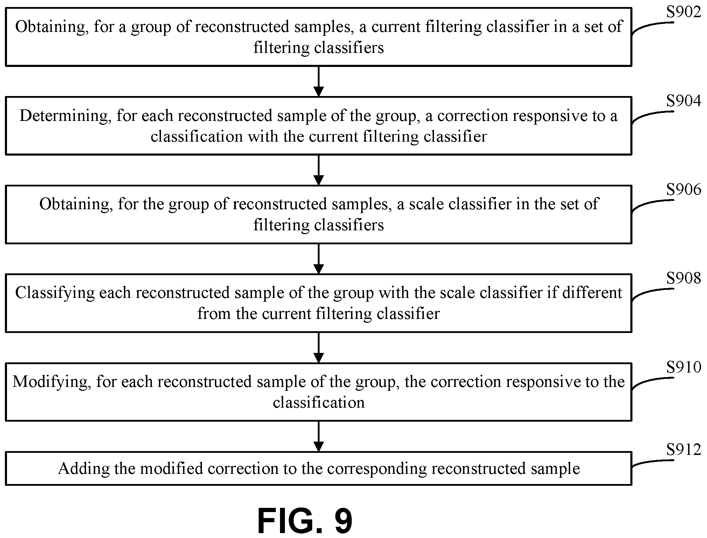

**FIG. 9** is a block diagram illustrating an example method (e.g., a filtering method) according to one or more embodiments of the present disclosure. The method may be par of both an encoding method or a decoding method.

A current filtering classifier (e.g., CF) is obtained (e.g., selected) (S902) in a set of filtering classifiers (e.g., {CFi} i=0,1,2) for a group of reconstructed samples (e.g., a slice).

For each reconstructed sample of the group, a correction (e.g., corr) is determined (S904) responsive to a classification with the current filtering classifier (e.g., an ALF classifier). The correction may be obtained, for example, using parameters of an ALF filter as indicated by Eq. 8, wherein the filter parameters are associated with a class index.

For the group of reconstructed samples, a scale classifier is obtained (e.g., selected) (S906) in the set of filtering classifiers.

Each reconstructed sample of the group is classified (S908) with the scale classifier if different from the current filtering classifier. Otherwise, this step is skipped and the previous classification with the current filtering classifier may be reused.

For each reconstructed sample of the group, the correction is modified (e.g., scaled) (S910) responsive to the classification.

The modified correction is added (S912) to the corresponding reconstructed sample.

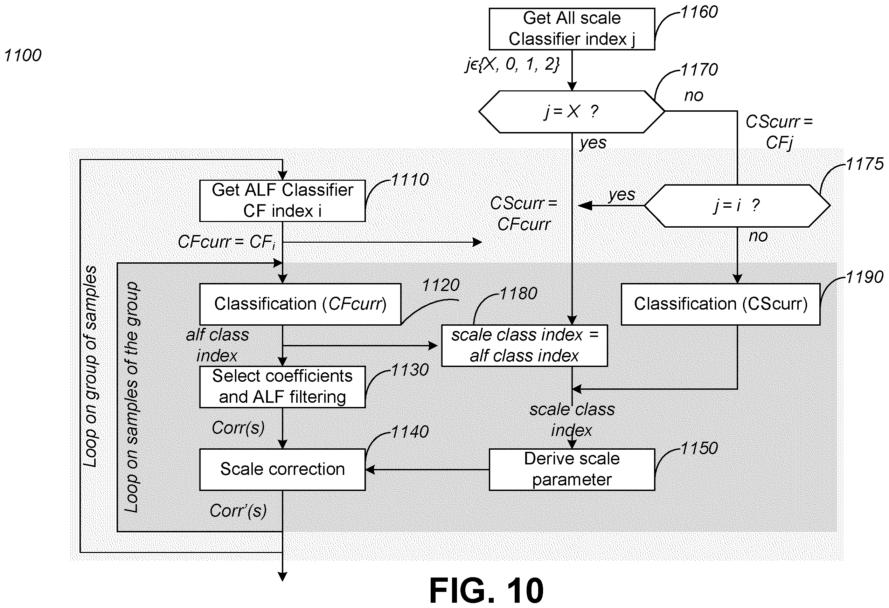

**FIG. 10** is a block diagram illustrating an example filtering and scale correction method 1100 according to one or more embodiments of the present disclosure.

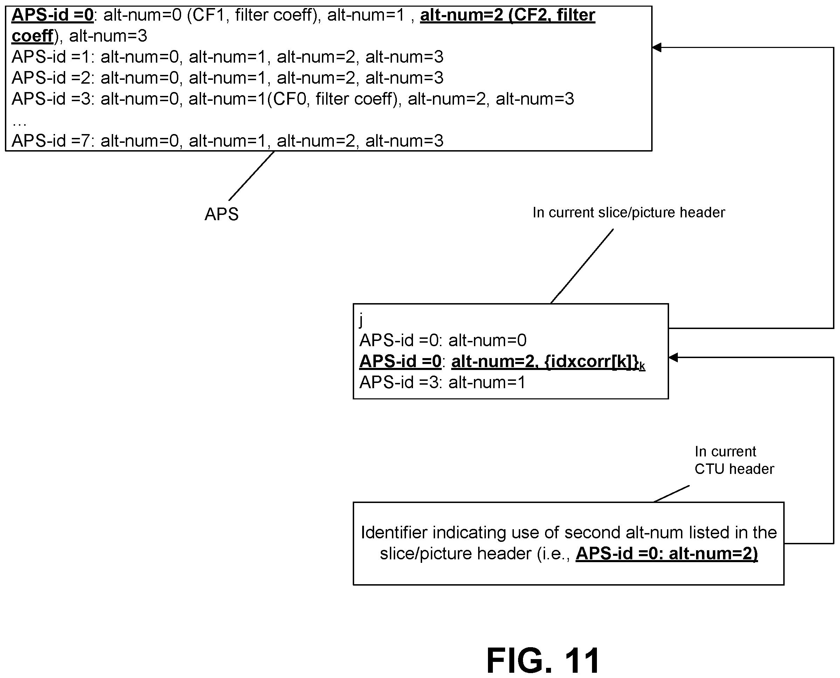

As mentioned with reference to FIG. 7, in a header of a (e.g., each) region (e.g., slice or picture), a list of APS (e.g., of filter sets) used in a current region (e.g., slice/picture) may be derived (e.g., signaled, decoded). Indeed, a slice or a picture may use a subset of all APS stored in memory (from previously decoded APSs). For example, a list of APS-Id (e.g., in the slice/picture header) may be decoded. Besides, for each APS used in the current region, a list of APS-alt used in the current region (e.g., slice/picture) may be derived (e.g., decoded). Indeed, an APS may comprise a plurality (e.g., 4) of alternative filter sets, i.e. a plurality of APS-alt. For example, a slice header may signal that the group of samples of the current slice uses APS-alt of APS-id=0 identified by alt-num=0 and of alt-num=2 and APS-alt of APS-id=3 identified by alt-num=1 as illustrated on FIG. 11.

In the FIG.10, a parameter (e.g., an index) j (1160) may be derived (e.g., signaled), for example in slice or picture header, for one or more (e.g., all) APS-alt (i.e., for one or more (e.g., all) filter sets) used in the slice/picture. The parameter j indicates for these one or more (e.g., all) APS-alt used in the slice/picture, if the scale classifier (CS) is the same as the ALF classifier (CF) used by this APS-alt, or if the one or more (e.g., all) APS-alt used in this slice/picture use a same (unique) classifier that may be different from the current ALF classifier (CF).

For example, on FIG. 10, if j is equal to X (1170), e.g., X=-1, then for all APS-alt used in this slice/picture, the scale classifier CS is the same as the ALF classifier CF (1180). In this case, different APS-alt may have different CF, but for a given APS-alt CS=CF. Said otherwise, if/when j is equal to X (1170), the scale classifier (CScurr) for a current group of samples (e.g., for a current CTU) is the same as the current ALF classifier (CFcurr) used for this current group of samples. CFcurr may be obtained (1110) from a group of samples header (e.g., from a CTU/CU header). Indeed, a CTU header may comprise information (e.g., signaled information) indicating the APS and the alternative filter set of this APS used by the group of samples.

If $j \in \{0,1$ or $2\}$, then CS is equal to CFj, i.e., all APS-alt used in the slice/picture uses a same scale classifier CS=CFj (1190) that may be different from the value of CF for this APS-alt. Said otherwise, if/when $j \in \{0,1$ or $2\}$, the scale classifier (CScurr) for the current group of samples (e.g., for the current CTU) is equal to CFj and thus may be different from CFcurr used for this current group of samples.

The samples of the current group of samples are classified (1120) using CFcurr. Based on the classification, ALF coefficients are selected (1130) and samples of the current group of samples are filtered (1130) using the selected ALF coefficients. To this aim, a correction corr(s) is obtained as the difference between the filtered sample F(s) and the reconstructed sample s.

In the case where, X=-1, scale classification of samples may be avoided as the same classification as for filtering is used, i.e., scale_class_index=alf_class_index (1180). In the case where, $j \in \{0, 1, 2\}$, then scale classification of samples is done (1190) using the ALF classifier CFj that may be different from CFcurr, except if CFj= CFcurr, in which case the scale classification is not done twice (1175)).

At least one scale parameter is derived (1150) based on the scale class index obtained for a current sample of the current group of samples. Scale correction is applied (1140) using the derived scale parameter to obtain a modified correction corr'(s) that may be added to a corresponding reconstructed sample 's' to obtain a corrected sample.

**FIG. 11** depicts an example of scale classifier derivation for a particular group of samples (e.g., CTU). The header (e.g., CTU header) comprises information identifying one particular APS-alt among the APS-alt used in the slice/picture the CTU belongs to. In the example of FIG. 11, the CTU header indicates to use the second APS-alt of the list of APS-alt in the slice/picture header, i.e., the CTU is using alt-num=2 of APS-id=0. The filter coefficients and ALF classifier to be used by the current CTU is thus obtained from the APS of APS-id=0. Indeed, the CTU uses the filter coefficients and ALF classifier associated with the alt-num=2 of APS-id=0. In the example of FIG. 11, the current ALF classifier is thus CF2, i.e. CFcurr=CF2.

The value of j derived from the current slice/picture header indicates whether, for all APS-alt (e.g., for all filter sets) used in this slice/picture, the scale classifier is the same as the ALF classifier (e.g., associated with this APS-alt) or if all APS-alt used in this slice/picture use a same classifier that may be different from the ALF classifier. In this example, a single value of j is derived for all APS-alt.

For example, in the case where X=-1, for all APS-alt used in this slice/picture the scale classifier is the same as the ALF classifier. Said otherwise, in the case where X=-1, each APS-alt of the list has a CS that is equal to its CF. Therefore, if j=X, then (APS-id =0, alt-num=0) uses CS=CF1, (APS-id =0, alt-num=2) uses CS=CF2 and (APS-id =3, alt-num=1) uses CS=CF0. Therefore, the scale classifier CScurr used by the current CTU is CFcurr, i.e., CF2 in the present case because the current CTU uses the second alt-num in the list, i.e. (APS-id =0, alt-num=2).

Otherwise (j{0, 1, 2}), then all APS-alt used in this slice/picture use a same classifier, i.e. CScurr=Cj, e.g., if j=0, then CScurr=CF0 which is different from CF2.

From the classifier CScurr, a scale class index is obtained (1180 or 1190). A scale parameter may be directly derived from the scale class index in a case where the scaling parameters are directly signaled in the slice header, e.g., for one (e.g., each) APS-alt used in the current slice or picture. In a variant, an index (e.g., idxCorr) referring to a (e.g., pre-determined) table (e.g., a look-up-table (LUT)) of scaling parameter values may be used. The index idxCorr associated with the scale class index may be obtained. The scale parameter may then be obtained from the LUT.

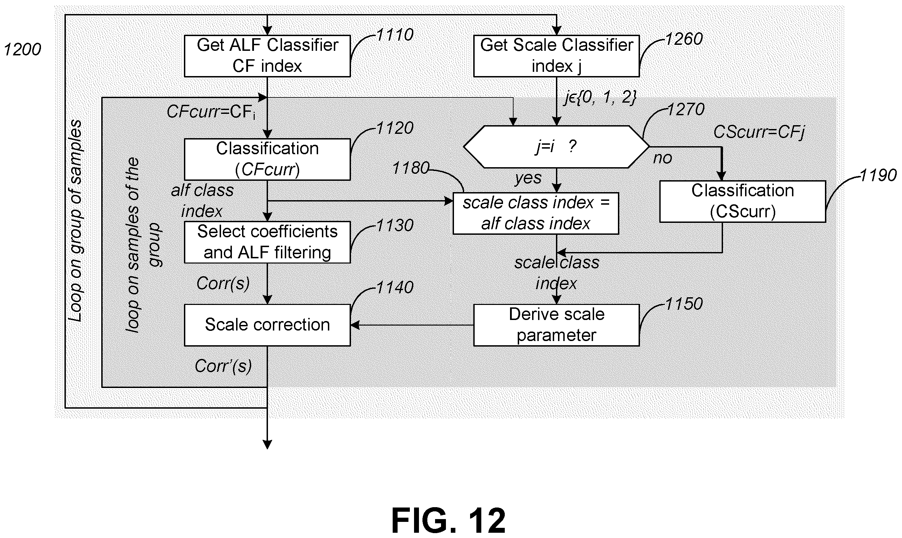

**FIG. 12** is a block diagram illustrating an example filtering and scale correction method 1200 according to one or more embodiments of the present disclosure.

In this example, the scale classifier for one APS-alt used in the current slice/picture can be the same or different from the ALF classifiers (CF) used to select the filter coefficients, but the scale classifier is one among the existing ALF classifiers. A parameter (e.g., an index) j is derived (e.g., signaled) for each APS-alt used in the current slice/picture (1260) (e.g., signaled in the slice or picture header). For each APS-alt, it indicates the scale classifier. This scale classifier may be same or different from the ALF classifier.

For example, on FIG. 12, for a current group of samples (e.g., a current CTU, CU), a current ALF classifier (CFcurr) used for this current group of samples is obtained (1110). One or more indices may be signaled (e.g., in a header of the current group of samples) to indicate the APS-alt used by this current group of samples, wherein this APS-alt is associated with one classifier CFi, which becomes thus the classifier used to classify the samples of the current group for filtering. The steps 1120, 1130, 1140, 1150, 1180 and 1190 that are identical to the steps of FIG. 11 are not further described.

A parameter (e.g., an index) j is obtained for the APS-alt listed in the slice/picture header that is used by the current group of samples, j∈{0, 1, 2} (1260). If j≠i, the CScurr=CFj and a scale classification applies (1190). Otherwise (j=i), alf_class_index is reused for scale classification (1180). The index j for the current group of samples may be obtained based on the one or more indices that may be signaled (e.g., in a header of the current group of samples) to indicate the APS-alt used by this current group of samples.

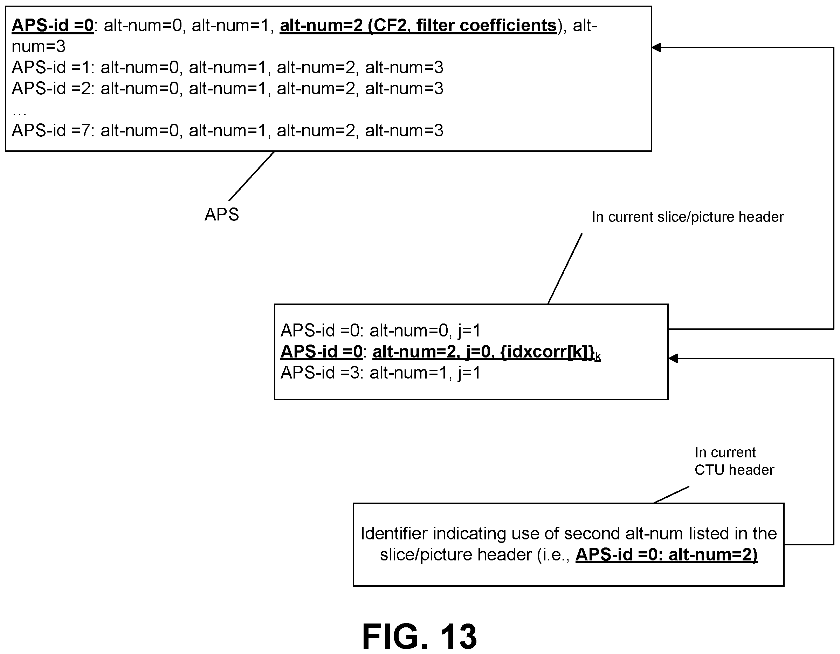

**FIG. 13** depicts an example of scale classifier derivation for a particular group of samples (e.g., CTU). The CTU header comprises information identifying one particular APS-alt among the APS-alt used in the slice/picture the CTU belongs to. In the example of FIG. 13, the CTU header indicates to use the second APS-alt of the list of APS-alt in the slice/picture header, i.e. the CTU is using alt-num=2 of APS-id=0. The filter coefficients and ALF classifier to be used by the current CTU is thus obtained from the APS-id=0. Indeed, the CTU uses the filter coefficients and ALF classifier associated with the alt-num=2 of APS-id=0. In the example of FIG. 13, the current ALF classifier is thus CF2, i.e., CFcurr=CF2.

In this example, a value of j is signaled (e.g., derived) from the current slice /picture header for each APS-alt. It indicates the scale classifier CScurr used by a CTU that uses this APS-alt among the classifiers {CFi}i=0,1,2.

For example, the scale classifier CScurr used by the current CTU is CF0 in the present case (j=0).

In another example, for a given APS-alt used in the current slice/picture, if the scaling parameters re-use the same (scaling) values as the ones used with same APS-alt in a previous frame, the scale classifier may remain the same as the one used by this APS-alt for the previous frame. In this case, the parameter j may not be signaled (implicitly equal to the same as the one used by this APS-alt for the previous frame).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A decoding method comprising:

   obtaining, for a group of reconstructed samples, a current filtering classifier in a set of filtering classifiers;
   determining, for each reconstructed sample of the group, a correction responsive to a classification with the current filtering classifier;
   obtaining, for the group of reconstructed samples, a scale classifier in the set of filtering classifiers; classifying each reconstructed sample of the group with the scale classifier if different from the current filtering classifier;
   modifying the correction of each reconstructed sample of the group responsive to the classification; and
   adding the modified correction to the corresponding reconstructed sample.

2. A decoding device comprising one or more processors and at least one memory coupled to said one or more processors, wherein said one or more processors are configured to perform :

   obtaining, for a group of reconstructed samples, a current filtering classifier in a set of filtering classifiers;
   determining, for each reconstructed sample of the group, a correction responsive to a classification with the current filtering classifier;
   obtaining, for the group of reconstructed samples, a scale classifier in the set of filtering classifiers; classifying each reconstructed sample of the group with the scale classifier if different from the current filtering classifier;
   modifying the correction of each reconstructed sample of the group responsive to the classification; and
   adding the modified correction to the corresponding reconstructed sample.

3. The method of claim 1 or the device of claim 2, wherein selecting, for the group of reconstructed samples, a scale classifier in the set of filtering classifiers comprises decoding an index in a header of a slice or picture to which the group of reconstructed samples belongs, said index indicating, for a plurality of filter sets used in the slice or picture whether the scale classifier of the filter set is the same as the filtering classifier of the filter set or whether all filter sets of the plurality uses a same classifier in a set of filtering classifiers.

4. The method of claim 1 or the device of claim 2, wherein selecting, for the group of reconstructed samples, a scale classifier in the set of filtering classifiers comprises decoding, for each filter set used in a slice or picture to which the group of reconstructed samples belongs, an index identifying a filter classifier in the set of filtering classifiers.

5. The method of claim 1 or the device of claim 2, wherein selecting, for the group of reconstructed samples, a scale classifier in the set of filtering classifiers comprises reusing a same scale classifier as a scale classifier used for a previous slice or picture in a case where an indicator indicates to reuse scaling parameters of the previous slice or picture.

6. An encoding method comprising:

   obtaining, for a group of reconstructed samples, a current filtering classifier in a set of filtering classifiers; determining, for each reconstructed sample of the group, a correction responsive to a classification with the current filtering classifier; obtaining, for the group of reconstructed samples, a scale classifier in the set of filtering classifiers; classifying each reconstructed sample of the group with the scale classifier if different from the current filtering classifier; modifying the correction of each reconstructed sample of the group responsive to the classification; and adding the modified correction to the corresponding reconstructed sample.

7. An encoding device comprising one or more processors and at least one memory coupled to said one or more processors, wherein said one or more processors are configured to perform :

   obtaining, for a group of reconstructed samples, a current filtering classifier in a set of filtering classifiers; determining, for each reconstructed sample of the group, a correction responsive to a classification with the current filtering classifier; obtaining, for the group of reconstructed samples, a scale classifier in the set of filtering classifiers; classifying each reconstructed sample of the group with the scale classifier if different from the current filtering classifier; modifying the correction of each reconstructed sample of the group responsive to the classification; and adding the modified correction to the corresponding reconstructed sample.

8. The method of claim 6 or the device of claim 7, wherein selecting, for the group of reconstructed samples, a scale classifier in the set of filtering classifiers comprises decoding an index in a header of a slice or picture to which the group of reconstructed samples belongs, said index indicating, for a plurality of filter sets used in the slice or picture whether the scale classifier of the filter set is the same as the filtering classifier of the filter set or whether all filter sets of the plurality uses a same classifier in a set of filtering classifiers.

9. The method of claim 6 or the device of claim 7, wherein selecting, for the group of reconstructed samples, a scale classifier in the set of filtering classifiers comprises decoding, for each filter set used in a slice or picture to which the group of reconstructed samples belongs, an index identifying a filter classifier in the set of filtering classifiers.

10. The method of claim 6 or the device of claim 7, wherein selecting, for the group of reconstructed samples, a scale classifier in the set of filtering classifiers comprises reusing the same scale classifier as a scale classifier used for a previous slice or picture in a case where an indicator indicates to reuse scaling parameters of the previous slice or picture.

11. A signal comprising video data, formed by performing the method of any one of claims 6 and 8-10.

12. A computer program comprising program code instructions for implementing the method according to any one of claims 1 and 3-5 when executed by a processor.

13. A computer program comprising program code instructions for implementing the method according to any one of claims 6 and 8-10 when executed by a processor.

14. A computer readable storage medium having stored thereon instructions for decoding according to the method of any one of claims 1 and 3-5.

15. A computer readable storage medium having stored thereon instructions for decoding according to the method of any one of claims 6 and 8-10.

**FIG. 1**

EP 4 727 119 A1

FIG. 2

EP 4 727 119 A1

FIG. 3

EP 4 727 119 A1

**FIG. 5**

get Filter parameters — 430
Compute correction — 540
Add correction — 450
Get Scaling parameters — 545
bitstream
CTU — 415
CTU loop
500
Corrected samples

**FIG. 4**

Classification — 420
get Filter parameters — 430
Compute correction — 440
Add correction — 450
CTU — 415
CTU loop
400
Corrected samples

**FIG. 6**

EP 4 727 119 A1

700

710 — Get ALF parameters (filter coeficients…)

720 — Get ALF-scale parameters (scale-correction)

730 — Get APS-Id, alt-num

740 — Filtering with ALF parameters

750 — Correction with ALF-scale parameters

loop on samples of the group

Loop on group of samples

Loop on slices/pictures

**FIG. 7**

Alternative filter set (alt-num=0)

Alternative filter set (alt-num=2)

Alternative filter set (alt-num=1)

Alternative filter set (alt-num=3)

APS (APS-Id=0)

Filter parameters (CF, filter coefficients)

**APS-alt**

**FIG. 8**

| Obtaining, for a group of reconstructed samples, a current filtering classifier in a set of filtering classifiers | S902 |

| Determining, for each reconstructed sample of the group, a correction responsive to a classification with the current filtering classifier | S904 |

| Obtaining, for the group of reconstructed samples, a scale classifier in the set of filtering classifiers | S906 |

| Classifying each reconstructed sample of the group with the scale classifier if different from the current filtering classifier | S908 |

| Modifying, for each reconstructed sample of the group, the correction responsive to the classification | S910 |

| Adding the modified correction to the corresponding reconstructed sample | S912 |

**FIG. 9**

1100

Get All scale Classifier index j ⎯1160

j∈{X, 0, 1, 2}

⎯1170

j = X ? — no

yes

CScurr = CFj

Get ALF Classifier CF index i ⎯1110

CScurr = CFcurr

yes

j = i ? ⎯1175

CFcurr = CFᵢ

no

Classification (CFcurr) ⎯1120

⎯1180

Classification (CScurr) ⎯1190

alf class index

scale class index = alf class index

Select coefficients and ALF filtering ⎯1130

Corr(s)

scale class index

⎯1140

Scale correction

Derive scale parameter ⎯1150

Corr'(s)

Loop on group of samples

Loop on samples of the group

**FIG. 10**

22

APS-id =0: alt-num=0 (CF1, filter coeff), alt-num=1 , **alt-num=2 (CF2, filter coeff**), alt-num=3
APS-id =1: alt-num=0, alt-num=1, alt-num=2, alt-num=3
APS-id =2: alt-num=0, alt-num=1, alt-num=2, alt-num=3
APS-id =3: alt-num=0, alt-num=1(CF0, filter coeff), alt-num=2, alt-num=3
...
APS-id =7: alt-num=0, alt-num=1, alt-num=2, alt-num=3

APS

In current slice/picture header

j
APS-id =0: alt-num=0
**APS-id =0**: **alt-num=2, {idxcorr[k]}$_k$**
APS-id =3: alt-num=1

In current CTU header

Identifier indicating use of second alt-num listed in the slice/picture header (i.e., **APS-id =0: alt-num=2)**

# FIG. 11

FIG. 12

**APS-id =0**: alt-num=0, alt-num=1, **alt-num=2 (CF2, filter coefficients**), alt-num=3
APS-id =1: alt-num=0, alt-num=1, alt-num=2, alt-num=3
APS-id =2: alt-num=0, alt-num=1, alt-num=2, alt-num=3
...
APS-id =7: alt-num=0, alt-num=1, alt-num=2, alt-num=3

APS

In current slice/picture header

APS-id =0: alt-num=0, j=1
**APS-id =0**: **alt-num=2, j=0, {idxcorr[k]}**$_k$
APS-id =3: alt-num=1, j=1

In current
CTU header

Identifier indicating use of second alt-num listed in the
slice/picture header (i.e., **APS-id =0: alt-num=2)**

# FIG. 13

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 395 311 A1 (ZTE CORP [CN]) 3 July 2024 (2024-07-03) | 1-4,6-9, 11-15 | INV. H04N19/117 |
| Y | * abstract * * paragraph [0041] - paragraph [0049] * * paragraph [0125] - paragraph [0128] * * figures 3,10,11 * ----- | 5,10 | H04N19/82 H04N19/70 H04N19/182 |
| Y | BORDES (INTERDIGITAL) P ET AL: "EE2-5.2: ALF residuals scaling", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0084 5 July 2024 (2024-07-05), XP030320227, Retrieved from the Internet: URL:https://jvet-experts.org/doc_end_user/documents/35_Sapporo/wg11/JVET-AI0084-v1.zip JVET-AI0084-v1.docx [retrieved on 2024-07-05] | 5,10 | |
| A | * abstract * * section 1 Introduction * * section 2 Proposal * ----- | 1-4,6-9, 11-15 | TECHNICAL FIELDS SEARCHED (IPC) H04N |
| | -/-- | | |

The present search report has been drawn up for all claims

| Place of search | Date of completion of the search | Examiner |
|---|---|---|
| The Hague | 20 March 2025 | Hampson, Frances |

EPO FORM 1503 03.82 (P04C01)

page 1 of 2

Europäisches
Patentamt

European
Patent Office

Office européen
des brevets

**EUROPEAN SEARCH REPORT**

Application Number

EP 24 30 6666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/ documents/34_Rennes/wg11/JVET-AH2025-v1.zi p JVET-AH2025-v1.docx [retrieved on 2024-06-26] * section 3.4 Adaptive loop filter * | 1-15 | |

----- 

TECHNICAL FIELDS SEARCHED (IPC)

The present search report has been drawn up for all claims

| Place of search | Date of completion of the search | Examiner |
|---|---|---|
| The Hague | 20 March 2025 | Hampson, Frances |

EPO FORM 1503 03.82 (P04C01)

page 2 of 2

## ANNEX TO THE EUROPEAN SEARCH REPORT
## ON EUROPEAN PATENT APPLICATION NO.

EP 24 30 6666

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| EP 4395311 | A1 | 03-07-2024 | CN | 115842914 A | 24-03-2023 |
| | | | EP | 4395311 A1 | 03-07-2024 |
| | | | JP | 2024537524 A | 10-10-2024 |
| | | | KR | 20240089319 A | 20-06-2024 |
| | | | US | 2024430488 A1 | 26-12-2024 |
| | | | WO | 2023109766 A1 | 22-06-2023 |

EPO FORM P0459

For more details about this annex : see Official Journal of the European Patent Office, No. 12/82